# EUROPEAN PATENT SPECIFICATION

(11) **EP 0 360 448 B1**
(45) Date of publication and mention of the grant of the patent: **26.01.1994**
(21) Application number: 89308928.4
(22) Date of filing: 04.09.1989
(51) Int. Cl.: F25D 23/00, F16F 1/36

(54) **Condensing unit with a system for mounting a motor-compressor**
Kondensationseinheit mit einer Befestigung für einen Kompressor
Unité de condensation avec un système de fixation d'un motocompresseur

(30) Priority: 19.09.1988 US 246437
(43) Date of publication of application: 28.03.1990
(73) Proprietor: COPELAND CORPORATION, Sidney Ohio 45365-0669 (US)
(72) Inventor: Tinsler, Theodore Ellsworth, Sidney Ohio 45365 (US)
(74) Representative: Senior, Alan Murray

(56) References cited:
- FR-A- 578 109
- FR-A- 1 298 250
- FR-A- 2 062 097
- FR-A- 2 297 317
- GB-A- 1 024 554
- US-A- 2 322 193
- US-A- 2 685 178
- US-A- 3 138 358
- US-A- 4 461 446
- US-A- 4 497 183
- PATENT ABSTRACTS OF JAPAN, vol. 10, no. 222 (M-504)[2278], 2nd August 1986;& JP-A-61 59 039 (NATL. TIRE K.K.) 26-03-1986
- MECHANICAL ENG., vol. 99, no. 7, July 1977, pages 35-41; W.W. CHOW: "Snap fit design"

## Description

This invention relates to a condensing unit, and more particularly to a system for mounting a motor-compressor to a refrigeration condensing unit.

Motor-compressors are conventionally mounted to such units using a spring suspension system to attenuate noise and vibration. These known systems are adequate, but suffer the disadvantage that they generally comprise a large number of separate pieces (often more than thirty per motor-compressor), and thus are relatively expensive to fabricate and assemble. In addition, spring suspensions are sometimes so soft that the excessive motion caused by starting and stopping of the compressor can damage the connecting refrigerant tubes. The softness of spring suspensions also usually requires that a shipping constraint be provided to prevent excessive motion of the motor-compressor during shipment. This increases cost and inconveniences the customer who must then remove the constraint.

It is a primary object of the present invention to provide an extremely simple and cost-effective mounting system which avoids the problems associated with the aforementioned known systems.

US-A-4 497 183 discloses a condenser unit in accordance with the prior art portion of claim 1. With this prior unit, the spacers are retained on the base by retaining means which extend up through the spacer so that the ends of the spacers remote from the base are engaged, thus restricting deformation of the spacers which are substantially capable of damping vibrational forces only by compression of the spacers. The present invention, as defined in claim 1, appreciates the desirability of providing spacers which do not require the provision of such retaining means, simplifying construction of the base and providing a more efficient resilient support which is not restricted to operate only in compression and which allows horizontal deformation of the spacers. This provides for improved resilient support of the motor compressor in a refrigeration condensing unit. Great control can be given of the degree of resistance to vibrational movement by using the preferred form of the invention as defined in claim 13, in that the characteristics of the spacer can be carefully adapted to a particular mounting assembly by varying the number and depth of slots very easily provided in the periphery of the spacers.

Additional advantages of the present invention will become apparent from the subsequent description and the appended claims when taken in conjunction with the accompanying drawings, in which:-
Figure 1 is a perspective view of a refrigeration condensing unit embodying the principles of the present invention;
Figure 2 is an enlarged fragmentary vertical section view showing an assembled mounting spacer of the present invention in a relaxed state;
Figure 3 is a view similar to Figure 2 but rotated 90^{o} with respect thereto; and
Figure 4 is a top plan view of the spacer of the present invention.

### DESCRIPTION OF THE PREFERRED EMBODIMENT

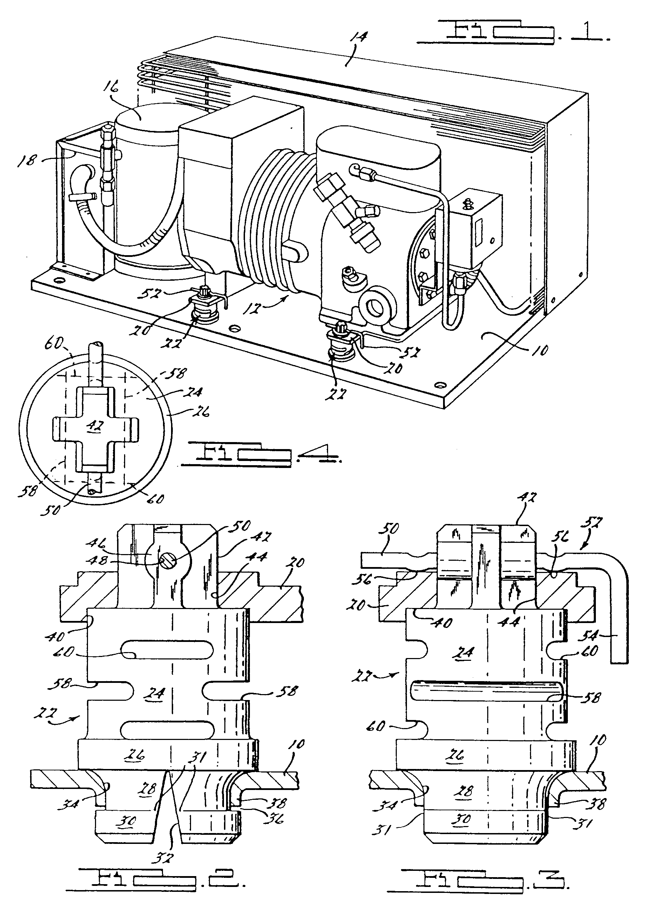

With reference to Figure 1, there is illustrated a refrigeration condensing unit embodying the mounting system of the present invention. The unit generally comprises a rigid base 10, a semi-hermetic motor-compressor 12, a condensing heat exchanger and fan assembly 14, a receiver 16 and an electrical box 18, all interconnected in the usual way. Compressor 12 has four feet 20 (two of which are shown) projecting laterally outwardly from the bottom thereof for mounting the motor-compressor on base 10.

The present invention resides in the provision of unique spacers, identified at 22, for resiliently mounting or suspending motor-compressor 12 with regard to base 10. Each spacer 22 is formed of an elastomeric material, such as a thermoplastic polyester elastomer comprised of a hard segment of polybutylene terephthalate (PBT) and a soft segment of polyethelene terephthalate (PET) (for example "Tytrel 4074" supplied by DuPont de Nemours located at Wilmington, Delaware), and is preferably inexpensively fabricated by injection molding. It should be a relatively hard material, i.e. in the order of 40D durometer. In shape, each spacer 22 has a generally circular cylindrical main body portion 24 integrally formed with a lower support flange 26 from which downwardly projects a radiused mounting projection 28 having an enlarged terminal head portion 30, projection 28 and head 30 having a diametrical upwardly extending V-shaped slot 32 therethrough (Figure 2).

Spacer 22 is assembled to base 10 by forcing projection 28 and head 30 through an extruded contoured hole 34 in base 10 until flange 26 seats on the base. Slot 32 permits the projection and cap to collapse enough to facilitate assembly, and thereafter cap 30 re-expands to prevent inadvertent removal of the spacer. Cap 30 is relieved at the ends of slot 32, as at 31, to facilitate assembly. A minimal clearance, such as at 36, is provided between cap 30 and the bottom of base 10 (or the small flange 38 formed when forming hole 34, as shown in Figures 2 and 3) to restrict vertical movement of spacer 22 in hole 34. Projection 28 and hole 34 are preferably given the complementary contoured shape illustrated in Figure 2 and 3. The radiused entrance to hole 34 facilitates insertion of the spacer, and the smooth walls thereof prevent abrasion of the spacer. Spacer 22 is preferably aligned so that slot 32 is generally parallel to the crankshaft of the motor-compressor so a to minimize the tendency of vibrational forces rocking spacer 22 out of hole 44 (i.e., the two relieved portions 31 on cap 30 on each side of slot 32 are disposed in planes parallel to the crankshaft axis, as is shown).

The upper end of spacer main body portion 24 is nested in a counterbore 40 formed in each foot 20 and has projecting upwardly therefrom a post 42 of cross-shaped cross-section which extends through a round hole 44 in foot 20. Post 42 has a transverse tubular portion 46 having a transverse hole 48 in which is disposed the long leg 50 of an L-shaped locking pin 52, the short leg 54 of which serves as a handle. With spacer 22 in place, assembly is effected by lowering the compressor on to the spacers with a post 42 extending up through hole 44 in each foot 20. A locking pin 52 is then manually press fit through each hole 48. Pin 52 and spacer 22 are preferably orientated so that leg 50 of pin 52 is generally parallel to the axis of the compressor crankshaft so that the major vibration component of the motor-compressor does not tend to shake pin 52 out of hole 48, as best shown in Figures 2 and 3. Also, a pair of bumps 56 are formed in leg 50 to help prevent pin 52 from working out of hole 48 (they provide a friction/interference fit in hole 48). The entire assembly process, which involves only eight mounting pieces, can thus be accomplished without the use of tools, both ends of the spacer being champhered as shown to facilitate this assembly. Disassembly for repairs or the like can be similarly effected.

The degree of vibration and sound attenuation, and the frequencies attenuated, are controlled by providing in body portion 24 slots and/or openings of desired size, shape, number and location, all of which effect the hardness or spring rate of the spacer. In the embodiment illustrated there are provided a pair of oppositely disposed generally horizontal slots 58 and a pair of generally flat spaced horizontal slots 60, rotated approximately 90^{o} with respect to slots 58 and slightly overlying same. The arrangement shown has been found to be ideal in that it provides for a higher spring rate in the horizontal direction than in the vertical direction, and it is an easy to mold part (can use a simple two-piece mold without cams, etc.) which yields much design freedom in controlling softness or spring rate. To reduce spring rate it is only necessary to increase the depth of slots 60 or the depth of slots 58 to increase the degree of overlap of the two. For a given application the proper configuration can be achieved by starting with small slots and then progressively increasing them in size until the desired amount of attenuation is obtained, using trial and error techniques.

## Claims

1. A condensing unit comprising a rigid base (10), a plurality of elastomeric spacers (22) secured to said base, and a motor-compressor (12) detachably fixed to said spacers such that the spacers comprise the sole supporting connection between the motor-compressor (12) and the base (10), characterised in that each spacer (22) has an integral bottom projection (28) which projects downwardly through a hole (34) in said base; and in that each said spacer comprises an integral head (30) on the lower end of its said projection (28), a portion of said head having an outside dimension slightly larger than that of said hole (34) to prevent easy removal of said projection from said hole.

2. A condensing unit as claimed in claim 1, wherein said hole (34) has a radiused upper edge and the wall of said hole is relatively smooth.

3. A condensing unit as claimed in claim 2, wherein said projection (28) has a contour complementary in shape to that of said hole (34), as viewed in vertical section.

4. A condensing unit as claimed in claim 1, 2 or 3, wherein said head (30) has an upper surface which is closely spaced (at 36) from a bottom edge bounding said hole.

5. A condensing unit as claimed in any preceding claim, wherein each said spacer (22) is provided with a generally vertically disposed slot (32) through its said projection (28) and head (30) to permit collapsing of the latter during assembly into the hole (34).

6. A condensing unit as claimed in claim 5, wherein said vertically disposed slot (32) is diametrically located and is of generally inverted V-shape.

7. A condensing unit as claimed in any preceding claim, wherein a supporting flange (26) is provided on each said spacer (22) disposed on the upper surface of said base (10).

8. A condensing unit as claimed in any preceding claim, wherein each said spacer (22) has an integral vertically extending top post (42) and said motor compressor (12) has a plurality of mounting feet (20) each having a hole (44) therethrough to receive a respective one of said top posts, a counterbore (40) preferably being in the bottom of each of said feet, nestingly to receive said spacer.

9. A condensing unit as claimed in claim 8, wherein said post (42) is cross-shaped in horizontal cross-section.

10. A condensing unit as claimed in claim 8 or 9, wherein a generally horizontal transverse bore (48) is provided through said post (42) above the upper surface of said foot, a locking pin (50) being disposed in said bore, preferably being held in said bore by a friction/interference fit.

11. A condensing unit as claimed in claim 10, wherein said pin (50) has at least one bump (56), preferably two on each side and outwardly of said post (42), thereon, which bump has a vertical dimension equal to or slightly greater than the normal distance between the upper surface of said foot (20) and said bore (48), whereby rotation of said pin will cause said bump or bumps (56) tightly frictionally to engage the upper surface of said foot (20) further to hold the assembly together.

12. A condensing unit as claimed in any preceding claim, wherein said spacer (22) is formed of a thermoplastic polyester elastomer, preferably being comprised of a hard segment of polybutylene terephthalate (PBT) and a soft segment of polyethylene terephthalate (PET).

13. A condensing unit as claimed in any preceding claim, wherein each said spacer (22) has at least one transverse peripheral slot (58) extending in one direction and/or at least one transverse peripheral slot (60) extending in a direction rotated approximately 90° from the said one direction, the noise and vibration attenuation characteristics of the spacer being variable in accordance with the dimensions of the slot(s).

14. A condensing unit as claimed in claim 13, having overlapping slots (58,60) in each said spacer (22).

15. A condensing unit as claimed in any preceding claim, wherein said spacer (22) has a higher spring rate in the horizontal direction than in the vertical direction.

## Patentansprüche

1. Kondensationseinheit, enthaltend einen starren Fuß (10), eine Vielzahl von Abstandscheiben (22) aus Elastomermaterial, die am genannten Fuß befestigt sind, und einen Motorkompressor (12), der abnehmbar an den genannten Abstandscheiben befestigt ist, so daß die Abstandscheiben die einzige Stützverbindung zwischen dem Motorkompressor (12) und dem Fuß (10) bilden, dadurch gekennzeichnet, daß jede Abstandscheibe (22) einen fest eingebauten unteren Vorsprung (28) besitzt, der nach unten durch ein Loch (34) im genannten Fuß ragt, und daß jede der genannten Abstandscheiben einen fest eingebauten Kopf (30) am unteren Ende des genannten Vorsprungs (28) aufweist, wobei eine Außenabmessung eines Teils des genannten Kopfs geringfügig größer ist als diejenige des genannten Lochs (34), um ein leichtes Entfernen des genannten Vorsprungs aus dem genannten Loch zu verhindern.

2. Kondensationseinheit nach Anspruch 1, wobei das genannte Loch (34) eine gerundete Oberkante besitzt und die Wand des genannten Lochs relativ glatt ist.

3. Kondensationseinheit nach Anspruch 2, bei der der genannte Vorsprung (28) eine Kontur besitzt, die, wenn im vertikalen Schnitt betrachtet, in ihrer Form zu der Form des genannten Lochs (34) paßt.

4. Kondensationseinheit nach Anspruch 1, 2 oder 3, bei der der genannte Kopf (30) eine Oberseite besitzt, die (bei 36) einen geringen Abstand von einer an das genannte Loch angrenzenden Unterkante aufweist.

5. Kondensationseinheit nach einem der vorherigen Ansprüche, bei der jede der genannten Abstandscheiben (22) mit einem allgemein vertikal angeordneten Schlitz (32) versehen ist, der durch den genannten Vorsprung (28) und Kopf (30) verläuft, um ein Zusammendrücken des letzteren beim Einbau in das Loch (34) zu ermöglichen.

6. Kondensationseinheit nach Anspruch 5, bei der der genannte, vertikal angeordnete Schlitz (32) diametral angeordnet ist und die allgemeine Form eines umgekehrten V besitzt.

7. Kondensationseinheit nach einem der vorherigen Ansprüche, bei der an jeder der genannten Abstandscheiben (22), an der Oberseite des genannten Fußes (10) angeordnet, ein Stützflansch (26) vorgesehen ist.

8. Kondensationseinheit nach einem der vorherigen Ansprüche, bei der jeder der genannten Abstandscheiben (22) eine fest eingebaute, vertikal verlaufende obere Säule (42) und der genannte Motorkompressor (12) eine Vielzahl von Einbaufüßen (20) aufweist, durch die jeweils ein Loch (44) zur Aufnahme jeweils eines der genannten oberen Säulen verläuft, während im Boden jedes der genannten Füße zur Einpassung der genannten Abstandscheibe vorzugsweise eine Gegenbohrung (40) vorgesehen ist.

9. Kondensationseinheit nach Anspruch 8, bei der die genannte Säule (42) im horizontalen Querschnitt kreuzförmig ausgebildet ist.

10. Kondensationseinheit nach Anspruch 8 oder 9, bei der durch die genannte Säule (42) über der Oberseite des genannten Fußes eine allgemein horizontal verlaufende Querbohrung (48) verläuft, wobei sich in der genannten Bohrung ein Sicherungsstift (50) befindet, der in der genannten Bohrung vorzugsweise durch Reib-/Preßpassung festgehalten wird.

11. Kondensationseinheit nach Anspruch 10, bei der der genannte Stift (50) wenigstens eine Wölbung (56) aufweist, vorzugsweise jedoch zwei auf jeder Seite und außerhalb der genannten Säule (42), und wobei diese Wölbung eine vertikale Abmessung hat, die gleich dem normalen Abstand zwischen der Oberseite des genannten Fußes (20) und der genannten Bohrung (48) oder geringfügig größer ist, wodurch die Drehung des genannten Stifts einen festen Reibschluß zwischen der genannten Wölbung oder den genannten Wölbungen (56) und der Oberseite des genannten Fußes (20) bewirkt, um die Einheit zusätzlich zusammenzuhalten.

12. Kondensationseinheit nach einem der vorherigen Ansprüche, bei der die genannte Abstandscheibe (22) aus einem thermoplastischen Polyester-Elastomer besteht, vorzugsweise bestehend aus einem harten Segment aus Polybutylenterephthalat (PBT) und einem weichen Segment von Polyethylenterephthalat (PET).

13. Kondensationseinheit nach einem der vorherigen Ansprüche, bei der die genannte Abstandscheibe (22) wenigstens einen Quer-Umfangsschlitz (58) aufweist, der sich in einer Richtung erstreckt, bzw. wenigstens einen Quer-Umfangsschlitz (60), der sich in einer Richtung erstreckt, die gegenüber der genannten einen Richtung um ca. 90° gedreht ist, wobei die Lärm- und Vibrationsdämpfungseigenschaften der Abstandscheibe entsprechend den Abmessungen des Schlitzes (der Schlitze) variabel sind.

14. Kondensationseinheit nach Anspruch 13, die in jeder der genannten Abstandscheiben (22) überlappende Schlitze (58, 60) besitzt.

15. Kondensationseinheit nach einem der vorherigen Ansprüche, bei der die genannte Abstandscheibe (22) in horizontaler Richtung eine größere Federkonstante aufweist als in vertikaler Richtung.

## Revendications

1. Unité de condensation comprenant une base rigide (10), une pluralité d'écarteurs en élastomère (22) fixés sur ladite base, et un motocompresseur (12) fixé de manière détachable auxdits écarteurs de telle sorte que les écarteurs constituent l'unique liaison porteuse entre le motocompresseur (12) et la base (10), caractérisée en ce que chaque écarteur (22) possède d'un seul tenant une partie de fond en saillie (28), qui fait saillie vers le bas à travers un trou (34) pratiqué dans ladite base ; et en ce que chacun desdits écarteurs comprend une tête d'un seul tenant (30) à l'extrémité inférieure de sa partie en saillie précitée (28), une partie de ladite tête possédant une dimension extérieure légèrement supérieure à celle dudit trou (34), afin d'empêcher ladite partie en saillie d'être facilement enlevée dudit trou.

2. Unité de condensation selon la revendication 1, dans laquelle ledit trou (34) possède un bord supérieur arrondi et la paroi dudit trou est relativement lisse.

3. Unité de condensation selon la revendication 2, dans laquelle ladite partie en saillie (28) possède un contour de forme complémentaire de celle dudit trou (34), vu en coupe verticale.

4. Unité de condensation selon l'une des revendications 1, 2 ou 3, dans laquelle ladite tête (30) possède une surface supérieure qui est faiblement espacée (36) d'un bord inférieur délimitant ledit trou.

5. Unité de condensation selon l'une quelconque des revendications précédentes, dans laquelle chacun desdits écarteurs (22) est pourvu d'une fente (32) disposée sensiblement verticalement, traversant la partie en saillie (28) et la tête (30) afin de permettre un écrasement de cette dernière lors de l'assemblage dans le trou (34).

6. Unité de condensation selon la revendication 5, dans laquelle ladite fente verticale (32) est disposée diamétralement et présente une forme général de V inversé.

7. Unité de condensation selon l'une quelconque des revendications précédentes, dans laquelle un flasque de support (26) est prévu sur chacun desdits écarteurs (22), et est disposé sur la surface supérieure de ladite base (10).

8. Unité de condensation selon l'une quelconque des revendications précédentes, dans laquelle chacun desdits écarteurs (22) possède un montant supérieur solidaire (42) s'étendant verticalement, et ledit motocompresseur (12) possède une pluralité de pieds de montage (20) qui possèdent chacun un trou (44) pour y recevoir un montant supérieur (42) respectif, une noyure (40) étant de préférence pratiquée dans le fond de chacun desdits pieds, pour y loger ledit écarteur.

9. Unité de condensation selon la revendication 8, dans laquelle ledit montant (42) est en forme de croix en coupe transversale horizontale.

10. Unité de condensation selon la revendication 8 ou 9, dans laquelle un perçage transversal sensiblement horizontal (48) est pratiqué dans ledit montant (42) au-dessus de la surface supérieure dudit pied, une goupille d'arrêt (50) étant disposée dans ledit perçage, en étant de préférence maintenue dans ledit perçage par un ajustement serré par friction.

11. Unité de condensation selon la revendication 10, dans laquelle ladite goupille (50) présente au moins un bossage (56), et de préférence deux bossages, de part et d'autre et extérieurement audit montant (42), ce bossage présentant une dimension verticale égale ou légèrement supérieure à la distance normale entre la surface supérieure dudit pied (20) et ledit perçage (48), de sorte que, suite à la rotation de ladite goupille, ledit bossage ou lesdits bossages (56) engageront en serrage par friction la surface supérieure dudit pied (20), assujettissant ainsi encore mieux l'assemblage.

12. Unité de condensation selon l'une quelconque des revendications précédentes, dans laquelle ledit écarteur (22) est réalisé en un élastomère polyester thermoplastique, constitué de préférence d'un segment dur de téréphtalate de polybutylène (PBT) et d'un segment mou de téréphtalate de polyéthylène (PET).

13. Unité de condensation selon l'une quelconque des revendications précédentes, dans laquelle chacun desdits écarteurs (22) possède au moins une fente périphérique transversale (58) s'étendant dans une première direction et/ou au moins une fente périphérique transversale (60) s'étendant dans une direction tournée d'environ 90° par rapport à ladite première direction, les caractéristiques d'amortissement du bruit et des vibrations de l'écarteur étant variables en fonction des dimensions de ladite ou desdites fentes.

14. Unité de condensation selon la revendication 13, possédant des fentes chevauchantes (58, 60) dans chacun desdits écarteurs (22).

15. Unité de condensation selon l'une quelconque des revendications précédentes, dans laquelle ledit écarteur (22) possède une plus grande flexibilité en direction horizontale qu'en direction verticale.
